# EUROPÄISCHE PATENTANMELDUNG

(11) **EP 4 786 316 A1**
(43) Veröffentlichungstag der Anmeldung: **05.08.2026**
(21) Anmeldenummer: 26155376.2
(22) Anmeldetag: 30.01.2026
(51) Int. Cl.: B62J 1/00, B29C 44/02, B62J 1/18

(54) **VERFAHREN ZUR HERSTELLUNG EINES FAHRRADSATTELS UND FAHRRADSATTEL**

(30) Priorität: 30.01.2025 DE 102025103502
(71) Anmelder: Ergon International GmbH, 56070 Koblenz (DE)
(72) Erfinder: Krause, Andreas, 56068 Koblenz (DE); Juckwer, Christine, 56073 Koblenz (DE); Haas, Sebastian, 56346 Lykershausen (DE)
(74) Vertreter: dompatent

(57) **Zusammenfassung**

Die Erfindung umfasst ein Verfahren zur Herstellung eines Fahrradsattels (10), mit den Schritten: - Bereitstellen einer Gussform, - Aufbringen eines Polyurethan aufweisenden Beschichtungsmittels auf eine Negativform der Gussform zur Ausbildung einer Deckschicht (20) des Fahrradsattels (10), und - Einbringen eines PU-Schaums in die mit dem Beschichtungsmittel bedeckte Negativform zur Ausbildung eines Sitzpolsters (18) eines Sattelpolsters (17) des Fahrradsattels (10). Ferner umfasst die Erfindung einen Fahrradsattel (10).

## Beschreibung

Die Erfindung betrifft ein Verfahren zur Herstellung eines Fahrradsattels und einen Fahrradsattel.

Fahrradsättel weisen eine Sattelschale auf, deren Unterseite generell mit einem Sattelgestell verbunden ist. Auf der Oberseite der Sattelschale ist ein Sattelpolster angeordnet. Üblicherweise sind Sattelpolster aus aufgeschäumtem Material wie PU-Schaum hergestellt. Die Sattelpolster sind auf die Oberseite der Sattelschale aufgeklebt. Derartige, insbesondere geschäumte Sattelpolster weisen gute Dämpfungseigenschaften auf.

Ferner existieren Fahrradsättel, die ein mehrschichtiges Sattelpolster aufweisen. Bspw. kann das Sattelpolster Gelpolster oder TPU-Kerne, insbesondere zusätzlich zu der Schicht aus Polyurethan (PU)-Schaum, zur Umsetzung weiterer, vorzugsweise andersartiger Dämpfungseigenschaften aufweisen.

Das ein- oder mehrschichtige Sattelpolster ist an der Außenseite des Fahrradsattels mit einem, insbesondere Textil, wie bspw. Mikrofaser, aufweisendem Bezug überzogen.

Fahrradsättel des Stands der Technik mit TPU-Kern sind bspw. in WO2018041621A1 oder WO2018219635A1 beschrieben.

Aktuell werden Fahrradsätteln bspw. durch ein Verkleben des Sattelpolsters mit der Sattelschale hergestellt, wobei ggf. eine Zwischenlage aus TPU eingebracht und verklebt wird. Dieser Mehrschichtkörper wird sodann mit einem Textilbezug überspannt und ggf. adhäsiv, insbesondere klebend, damit verbunden.

Diese bekannten Herstellungsverfahren, bei denen häufig mehrere manuelle Produktionsschritte notwendig sind, sind aufwendig, komplex und personalintensiv.

Darüber hinaus ist an Fahrradsätteln des Stands der Technik nachteilig, dass diese nicht oder nur aufwendig zu recyceln sind, wobei bspw. ein Zerlegen der verschiedenen Schichten notwendig ist.

Aufgabe der Erfindung ist es ein verbessertes Verfahren zur Herstellung eines Fahrradsattels und einen verbesserten Fahrradsattel zu schaffen, wobei insbesondere die Verarbeitung von Fahrradsätteln verbessert ist.

Die Lösung der Aufgaben erfolgt erfindungsgemäß durch ein Verfahren zur Herstellung eines Fahrradsattels gemäß Anspruch 1 und einen Fahrradsattel gemäß Anspruch 11.

Die Erfindung betrifft ein Verfahren zur Herstellung eines Fahrradsattels, bspw. eines Rennradsattels. Das Verfahren weist den Schritt des Bereitstellens einer Gussform für den herzustellenden Fahrradsattel auf. Die Gussform weist vorzugsweise eine Negativform zumindest eines Teils des herzustellenden Fahrradsattels auf. Das Verfahren weist den weiteren Schritt des Aufbringens, insbesondere Besprühens, eines, vorzugsweise flüssigen, Polyurethan aufweisenden Beschichtungsmittels auf die Negativform zur Ausbildung einer Deckschicht des Sattels auf. Anschließend erfolgt ein Einbringen, insbesondere Einspritzen, eines PU-Schaums in die mit dem Beschichtungsmittel bedeckte Negativform zur Ausbildung eines Sitzpolsters eines Sattelpolsters des Sattels. Bevorzugt ist es, dass bei Einbringen des PU-Schaums das Beschichtungsmittel flüssig, insbesondere noch flüssig, ist. Insbesondere trocknet das Beschichtungsmittel nach Aufbringung auf die, bevorzugt erwärmte, Gussform und bildet derart die Deckschicht aus. Bevorzugt ist es, dass das Beschichtungsmittel vor Einbringung des PU-Schaums, insbesondere vollständig, getrocknet ist. Trocknen meint insbesondere ein Aushärten und/oder Verdunsten von Verdünnungsmittel des Beschichtungsmittels. Bei dem Sitzpolster handelt es sich insbesondere um ein erstes Polsterelement des Sattelpolsters. Bei dem Ausbilden, insbesondere Ausformen des Sitzpolsters durch Einbringen des PU-Schaums erfolgt bevorzugt eine, vorzugsweise vollflächige und/oder unmittelbare, Verbindung des Sitzpolsters mit dem Beschichtungsmittel, bspw. derart, dass das Sattelpolster mit dem Beschichtungsmittel zur Ausbildung der Deckschicht des Sattels beschichtet ist. Bevorzugt erfolgt hierbei eine, insbesondere vollflächige und/oder unmittelbare, Verbindung der Deckschicht mit einer Oberseite des Sitzpolsters. Bei dem Verdünnungsmittel handelt es sich bspw. um Wasser.

Eine unabhängige Erfindung betrifft das Verfahren zur Herstellung eines Fahrradsattels, wobei der Schritt des Aufbringens, insbesondere Besprühens, eines, vorzugsweise flüssigen, Polyurethan aufweisenden Beschichtungsmittels auf die Negativform zur Ausbildung einer Deckschicht des Sattels optional ist. Bei dieser unabhängigen Erfindung handelt es sich bei dem einzubringenden PU-Schaum um einen niedervernetzten oder nicht-vernetzten PU-Schaum. Diese unabhängige betrifft somit insbesondere ein Verfahren zur Herstellung eines Fahrradsattels, mit den Schritten: Bereitstellen einer Gussform; optionales Aufbringen, insbesondere Besprühen, eines Polyurethan aufweisenden Beschichtungsmittels auf eine Negativform der Gussform zur Ausbildung einer Deckschicht des Fahrradsattels; und Einbringen eines niedervernetzten oder nicht-vernetzten PU-Schaums in die mit dem Beschichtungsmittel bedeckte Negativform zur Ausbildung eines Sitzpolsters eines Sattelpolsters des Fahrradsattels.

In bevorzugter Ausführung erfolgt das Aufbringen des Beschichtungsmittels unmittelbar auf die, insbesondere trennmittelfreie und/oder lösungsmittelfreie und/oder klebstofffreie und/oder primerfreie, Negativform. Vorzugsweise erfolgt somit mit dem Beschichtungsmittel ein In-Mold Coating der Gussform. Es ist bevorzugt, dass das das Beschichtungsmittel als, insbesondere einziges, Trennmittel zwischen Negativform und einzubringendem PU-Schaum zur Ausbildung des Sitzpolsters aufgebracht wird. Das Beschichtungsmittel sorgt insbesondere für eine vollständige Separierung der Negativform von dem einzubringenden PU-Schaum zur Ausbildung des Sitzpolsters.

In bevorzugter Ausführung erfolgt beim Einbringen des PU-Schaums eine formschlüssige, insbesondere klebstofffreie, Verbindung zwischen PU-Schaum und Beschichtungsmittel. Klebstofffrei meint insbesondere, dass das Verfahren nicht den weiteren Schritt der Klebstoffaufbringung auf den PU-Schaum und/oder das Beschichtungsmittel und/oder das ausgebildete Sitzpolster und/oder die ausgebildete Deckschicht aufweist. Es ist bevorzugt, dass nach dem Einbringen des PU-Schaums ein gemeinsames Aushärten des Beschichtungsmittels und des PU-Schaums erfolgt. Besonders bevorzugt ist es, dass das Beschichtungsmittel vor Einbringen des PU-Schaum größtenteils oder vollständig ausgehärtet ist. Durch das bevorzugte Aushärten des Beschichtungsmittel vor Einbringen des PU-Schaums ist insbesondere vorteilhaft umgesetzt, dass das Beschichtungsmittel durch Einbringen des PU-Schaums nicht verdrängt wird.

In bevorzugter Ausführung weist die Gussform eine, insbesondere gelaserte, Texturierung auf. Bevorzugt ist es hierzu, dass das Verfahren insbesondere vor Aufbringen des Beschichtungsmittels, den weiteren Schritt des Einbringens, vorzugsweise Laserns, einer Texturierung in die Negativform aufweist. Bei Aufbringen des Beschichtungsmittels ist es sodann bevorzugt, dass Teile des Beschichtungsmittels in die Texturierung eingebracht werden. Die Texturierung ist insbesondere zur Ausbildung einer Oberflächenstruktur und/oder zur Ausbildung von Symbolen in der Deckschicht ausgeführt, wobei es bevorzugt ist, dass die Ausbildung der Oberflächenstruktur und/oder der Symbole beim Urformen der Deckschicht erfolgt.

In bevorzugter Ausführung weist das Verfahren den Schritt des, insbesondere formschlüssigen und/oder klebstofffreien Verbindens eines Polsterkerns des Sattelpolsters mit dem Sitzpolster auf. Bevorzugt erfolgt eine, insbesondere unmittelbare und/oder vollflächige, Verbindung einer Unterseite des Sitzpolsters mit dem Polsterkern, vorzugsweise einer Oberseite des Polsterkerns. Insbesondere erfolgt die Verbindung des Polsterkerns mit dem Sitzpolster durch ein Anspritzen, besonders bevorzugt Hinterspritzen, des Polsterkerns an das Sitzpolster, wobei es bevorzugt ist, dass ein den Polsterkern ausbildendes Gussmaterial, bevorzugt Schaumstoff, besonders bevorzugt PU-Schaumstoff, an das Sitzpolster an-, insbesondere hinterspritzt wird. Vorzugsweise bildet das Sitzpolster gemeinsam mit dem Polsterkern das Sattelpolster des Sattels aus.

In bevorzugter Ausführung weist das Verfahren den Schritt des, insbesondere formschlüssigen und/oder klebstofffreien Verbindens einer Sattelschale mit dem Sattelpolster, vorzugsweis dem Polsterkern oder dem Sitzpolster auf. Bevorzugt erfolgt eine, insbesondere unmittelbare und/oder vollflächige, Verbindung einer Unterseite des Sattelpolsters mit der Sattelschale, vorzugsweise einer Oberseite der Sattelschale. Insbesondere erfolgt die Verbindung der Sattelschale mit dem Sattelpolster durch ein Anspritzen, besonders bevorzugt Hinterspritzen, der Sattelschale an das Sattelpolster.

In bevorzugter Ausführung wird zur Verbindung der Sattelschale mit dem Sattelpolster, die, vorzugsweise in der Gussform angeordnete, Sattelschale um- und/oder hinterspritzt. Besonders bevorzugt wird die Sattelschale von dem Material aus dem das Sattelpolster, insbesondere das Sitzpolster und/oder der Polsterkern, hergestellt ist um- und/oder hinterspritzt, wobei die Sattelschale vorzugsweise von dem das Sitzpolster und/oder den Polsterkern ausbildenden PU-Schaum um- und/oder hinterspritzt wird. Zur Verbindung der Sattelschale mit dem Sattelpolster weist das Verfahren insbesondere den Schritt des, vorzugsweise fixierten, Anordnens der Sattelschale in der Gussform auf. Beim Anordnen der Sattelschale wird die Sattelschale insbesondere in einem Abstand zur der mit dem Beschichtungsmittel bedeckten Negativform angeordnet. Der Abstand entspricht insbesondere im Wesentlichen der Dicke des Sitzpolsters. Anschließend wird vorzugsweise der PU-Schaum zur Ausbildung des Sitzpolsters in die Gussform eingebracht, insbesondere eingespritzt, und derart eine, bspw. stoffschlüssige, Verbindung zwischen Sattelschale und Sitzpolster umgesetzt. Sofern der herzustellende Sattel einen Polsterkern aufweist, ist es bevorzugt, dass die Sattelschale in einem Abstand zum Sitzpolster in der Gussform angeordnet wird, wobei der Abstand insbesondere einer Dicke des Polsterkerns entspricht. Anschließend wird vorzugsweise der PU-Schaum zur Ausbildung des Polsterkerns in die Gussform eingebracht, insbesondere eingespritzt, und derart eine, bspw. stoffschlüssige, Verbindung zwischen Sattelschale und Polsterkern umgesetzt. Alternativ oder zusätzlich kann die Sattelschale insbesondere mit dem Sattelpolster, vorzugsweise dem Sitzpolster und/oder dem Polsterkern, verklebt werden. Die Deckschicht, das aus dem Sitzpolster und insbesondere dem Polsterkern bestehende Sattelpolster und die Sattelschale bilden gemeinsam den Sattelkörper des Sattels aus.

In bevorzugter Ausführung weist das Verfahren den Schritt des, insbesondere form- und/oder kraftschlüssigen Verbindens, eines Sattelgestells mit der Sattelschale auf. Das Sattelgestell ist vorzugsweise mit einer Unterseite der Sattelschale, insbesondere unmittelbar und/oder lösbar, verbunden. Es ist bevorzugt, dass die Sattelschale Öffnungen, bspw. einen Hinterschnitt, zum formschlüssigen Aufnehmen des Sattelgestells aufweist und/oder, dass die Sattelschale ein vorzugsweise schraubbares Klemmelement zur kraftschlüssigen Verbindung des Sattelgestells aufweist. Sattelgestell und Sattelkörper bilden gemeinsam den Sattel aus. Das Sattelgestell und die Sattelschale sind insbesondere lösbar miteinander verbunden.

In bevorzugter Ausführung weist die Gussform eine Negativform des Sattelpolsters, insbesondere des Sitzpolsters, sowie vorzugsweise zusätzlich der Decksicht und/oder des Polsterkerns auf. Insbesondere erfolgt ein gemeinsames Herstellen, bevorzugt ein Verbinden, besonders bevorzugt ein gemeinsames Urformen der Deckschicht und des Sitzpolsters sowie vorzugsweise des Polsterkerns und/oder der Sattelschale in einer gemeinsamen Gussform. Das gemeinsame Herstellen erfolgt vorzugsweise als Overmolding und/oder als Insertmolding. Möglich ist es, dass die Gussform eine Negativform des gesamten Sattelkörpers oder des gesamten Sattels aufweist.

In bevorzugter Ausführung weist das Verfahren den Schritt des Entformens des mit der Deckschicht verbundenen Sitzpolsters aus der Gussform auf. Beim Entformen des Sitzpolsters erfolgt somit insbesondere ein gemeinsames Entformen des Sitzpolsters mit der damit verbundenen Deckschicht. Möglich ist es insbesondere, dass beim Entformen, das aus Sitzpolster und Polsterkern bestehende Sattelpolster mit damit verbundener Deckschicht gemeinsame entformt wird. Weitergehend ist es möglich, dass beim Entformen der gesamte Sattelkörper und/oder der gesamte Sattel gemeinsam entformt wird.

Bei dem erfindungsgemäßen Fahrradsattel handelt es sich vorzugsweise um einen Rennradsattel. Der erfindungsgemäße Fahrradsattel weist eine Sattelschale und ein mit einer Unterseite der Sattelschale verbundenes Sattelgestell auf. Mit einer Oberseite der Sattelschale ist ein Sattelpolster, insbesondere vollflächig und/oder unmittelbar, verbunden. Das Sattelpolster weist ein Sitzpolster mit einer mit einer Oberseite des Sitzpolsters, insbesondere vollflächig und/oder unmittelbar, verbundenen Deckschicht auf. Die Deckschicht ist insbesondere als Beschichtung, insbesondere Beschichtungslack, mit dem Sitzpolster verbunden, vorzugsweise darauf aufgetragen. Die Deckschicht ist vorzugsweise gemeinsame mit dem Sitzpolster urgeformt und/oder entformt. Es ist bevorzugt, dass der Fahrradsattel bezugsstofffrei, insbesondere textilbezugsstofffrei, ist. Insbesondere ist der Fahrradsattel mit einem Verfahren hergestellt, das eines oder mehrere Merkmale des erfindungsgemäßen Verfahrens aufweist. Bei dem mit dem erfindungsgemäßen Verfahren hergestellten Fahrradsattel handelt es sich insbesondere um eine unabhängige Erfindung. Das Sattelgestell ist insbesondere form- und/oder kraftschlüssig mit der Sattelschale, vorzugsweise lösbar, verbunden. Es ist bevorzugt, dass die Sattelschale Öffnungen zum formschlüssigen Aufnehmen des Sattelgestells aufweist und/oder, dass die Sattelschale ein vorzugsweise schraubbares Klemmelement zur kraftschlüssigen Verbindung des Sattelgestells aufweist.

In bevorzugter Ausführung ist die Deckschicht stoffschlüssig und/oder klebstofffrei mit dem Sitzpolster verbunden. Vorzugsweise ist die Deckschicht mit dem Sitzpolster urgeformt.

In bevorzugter Ausführung weist das Sattelpolster einen mit der Oberseite der Sattelschale und mit einer Unterseite des Sitzpolsters verbundenen Polsterkern auf. Es ist bevorzugt, dass der Polsterkern, insbesondere über eine Oberseite des Polsterkerns, vollflächig und/oder unmittelbar mit der Sattelschale verbunden ist. Vorzugsweise ist der Polsterkern, insbesondere über eine Unterseite des Polsterkerns, vollflächig und/oder unmittelbar mit dem Sitzpolster verbunden. Es ist bevorzugt, dass alle Verbindungen zwischen den jeweiligen Elementen des Fahrradsattels stoffschlüssig und/oder klebstofffrei sind, wobei insbesondere der gesamte Sattel klebstofffrei ist.

In bevorzugter Ausführung weist die Deckschicht, eine insbesondere in der Deckschicht urgeformte Textur auf, wobei die Textur vorzugsweise eine Oberflächenstruktur und/oder Symbole in der Deckschicht ausbildet.

In bevorzugter Ausführung weist ein, zumindest die Deckschicht, das Sitzpolster und die Sattelschale sowie vorzugsweise den Polsterkern aufweisender Sattelkörper des Fahrradsattels, insbesondere der gesamte Sattelkörper, PU auf, besteht vorzugsweise zu zumindest 85 % oder zumindest 90 % oder zumindest 95 % oder zumindest 99 % daraus. Die vorstehenden Prozentangaben betreffen insbesondere Volumen- und/oder Gewichtsanteile. Die Deckschicht, das Sitzpolster, die Sattelschale und/oder der Polsterkern sind jeweils insbesondere aus niedervernetzten oder nicht-vernetzten PU-Materialien herzustellen bzw. hergestellt. Das PU der Deckschicht, des Sitzpolsters und/oder des Polsterkerns kann insbesondere Faserstoffe, vorzugsweise aus PU, zur Verstärkung aufweisen.

In bevorzugter Ausführung erstreckt sich die Deckschicht, das Sitzpolster und die Sattelschale sowie vorzugsweise der Polsterkern, insbesondere jeweils, über den Großteil der Sattellänge des Sattels, bevorzugt über die gesamte Sattellänge. Die Sattellänge entspricht insbesondere der Gesamtlänge des Sattels in einer in Fahrtrichtung verlaufenden Längsrichtung. Bevorzugt erstreckt sich die Deckschicht, das Sitzpolster und die Sattelschale sowie vorzugsweise der Polsterkern, insbesondere jeweils, über den Großteil der Sattelbreite des Sattels, bevorzugt über die gesamte Sattelbreite. Die Sattelbreite entspricht insbesondere der Gesamtbreite des Sattels in einer Richtung quer zur Fahrtrichtung. Vorzugsweise erstreckt sich die Deckschicht, zumindest teilweise, insbesondere vollständig, über eine umlaufende, seitliche Oberfläche (genannt Seitenfläche) des Sattelpolsters, insbesondere des Sitzpolsters. Mit anderen Worten ist somit vorzugsweise die Deckschicht mit der Oberseite und der umlaufenden Seitenfläche des Sattelpolsters, insbesondere des Sitzpolsters, verbunden. Es ist bevorzugt, dass der Sattelkörper aus einer Sandwich-Konstruktion aus der Deckschicht, dem Sitzpolster, der Sattelschale und vorzugsweise dem Polsterkern besteht. Die Deckschicht, das Sitzpolster, die Sattelschale und/oder der Polsterkern sind jeweils insbesondere einstückig ausgeführt. Bevorzugt weist der Sattel eine einzige Deckschicht, ein einziges Sitzpolster, eine einzige Sattelschale und/oder einen einzigen Polsterkern auf. Es ist bevorzugt, dass die Deckschicht nur mit dem Sitzpolster unmittelbar verbunden ist und/oder das Sitzpolster nur unmittelbar mit der Deckschicht und dem Polsterkern verbunden ist und/oder der Polsterkern nur unmittelbar mit dem Sitzpolster und der Sattelschale verbunden ist und/oder die Sattelschale nur unmittelbar mit dem Polsterkern und dem Sattelgestell verbunden ist und/oder das Sattelgestell nur unmittelbar mit der Sattelschale verbunden ist. Mit anderen Worten ist bevorzugt die Deckschicht mittelbar mit dem Polsterkern verbunden, und/oder ist bevorzugt die Deckschicht mittelbar mit der Sattelschale verbunden, und/oder ist bevorzugt die Deckschicht mittelbar mit dem Sattelgestell verbunden, und/oder ist bevorzugt das Sitzpolster mittelbar mit der Sattelschale verbunden, und/oder ist bevorzugt das Sitzpolster mittelbar mit dem Sattelgestell verbunden, und/oder ist bevorzugt der Polsterkern mittelbar mit dem Sattelgestell verbunden. In der alternativen bevorzugten Ausführung, in der der Sattel keinen Polsterkern aufweist, ist folglich das Sitzpolster nur unmittelbar mit der Deckschicht und der Sattelschale verbunden und/oder ist die Sattelschale nur unmittelbar mit dem Sitzpolster und dem Sattelgestell verbunden. Mit anderen Worten ist in der alternativen bevorzugten Ausführung die Deckschicht mittelbar mit der Sattelschale verbunden, und/oder ist bevorzugt die Deckschicht mittelbar mit dem Sattelgestell verbunden, und/oder ist bevorzugt das Sitzpolster mittelbar mit dem Sattelgestell verbunden.

In bevorzugter Ausführung des erfindungsgemäßen Verfahrens und/oder des erfindungsgemäßen Fahrradsattels weist die Deckschicht PU auf, besteht insbesondere daraus. Vorzugsweise weist das Beschichtungsmittel PU auf, besteht insbesondere zu zumindest 85 % oder zumindest 90 % oder zumindest 95 % daraus. Die vorstehenden Prozentangaben betreffen insbesondere Volumen- und/oder Gewichtsanteile. Das Beschichtungsmittel ist vorzugsweise ein Beschichtungslack. Insbesondere handelt es sich bei dem Beschichtungsmittel um eine hochflexible 1-Komponente-Polyurethan-basierte oder 2-Komponenten-Polyurethan-basierte Beschichtung. Besonders bevorzugt weist das Beschichtungsmittel das von der Firma BASF unter dem Produktnamen "NovaCoat-D" und/oder das unter dem Produktnamen "NovaCoat-P" vertriebene Material auf, besteht vorzugsweise daraus. Die Deckschicht ist insbesondere textilfrei. Das Beschichtungsmittel ist vorzugsweise lösungsmittel- und/oder wasserbasiert.

In bevorzugter Ausführung des erfindungsgemäßen Verfahrens und/oder des erfindungsgemäßen Fahrradsattels weist das Material, aus dem das Sitzpolster herzustellen bzw. hergestellt ist, PU-Material, bevorzugt ein niedervernetztes oder nicht-vernetztes PU-Material, besonders bevorzugt PU-Schaum auf, besteht vorzugsweise daraus. Besonders bevorzugt weist das Material aus, dem das Sitzpolster herzustellen bzw. hergestellt ist, das von der Firma BASF unter dem Produktnamen "Elastopan" vertriebene Material oder das von der Firma Huntsman unter dem Produktnamen "Smartlite O" vertriebene Material auf, besteht vorzugsweise daraus.

In bevorzugter Ausführung des erfindungsgemäßen Verfahrens und/oder des erfindungsgemäßen Fahrradsattels weist das Material, aus dem die Sattelschale herzustellen bzw. hergestellt ist, ein PU-Material, insbesondere thermoplastisches Polyurethan (TPU) auf, besteht vorzugsweise daraus. Das Material der Sattelschale weist insbesondere ein E-Modul von 1000 bis 10000, bevorzugt von 2000 bis 7000, besonders bevorzugt von 2500 bis 6500 auf. Besonders bevorzugt weist das Material, aus dem die Sattelschale herzustellen bzw. hergestellt ist, das von der Firma BASF unter dem Produktnamen "Elastollan", insbesondere "Elastollan R3000" oder "Elastollan R6000" vertriebene Material auf, besteht vorzugsweise daraus.

In bevorzugter Ausführung des erfindungsgemäßen Verfahrens und/oder des erfindungsgemäßen Fahrradsattels weist das Material, aus dem der Polsterkern herzustellen bzw. hergestellt ist, ein PU-Material, bevorzugt TPU, besonders bevorzugt expandiertes thermoplastisches Polyurethan (E-TPU) auf, besteht vorzugsweise daraus. Vorzugsweise wird der Polsterkern aus einem PU-Schaum hergestellt. Möglich ist es bevorzugt, dass das Material, aus dem der Polsterkern herzustellen bzw. hergestellt ist, einen oder mehrere Partikelschäume aufweist, vorzugsweise daraus besteht. Partikelschäume bestehen hierbei in der Regel aus kleinen Kügelchen des expandierten Grundmaterials, insbesondere TPU. Diese als Kügelchen oder andere Körper geformten Partikel werden in einem Werkzeug wie einer Gussform oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen. Insbesondere weist das Material, aus dem der Polsterkern herzustellen bzw. hergestellt ist, das von der Firma BASF unter dem Produktnamen "Infinergy" vertriebene Material oder das von der Firma Huntsman unter dem Produktnamen "Smartlite O" vertriebene Material auf, besteht vorzugsweise daraus. Der Polsterkern ist insbesondere elastisch verformbar, so dass eine Relativbewegung zwischen dem Trägerelement und der Sattelschale ermöglicht ist. Hierbei ist es insbesondere möglich, zur Ausgestaltung von Sätteln mit unterschiedlichen Komforteigenschaften Polsterkerne aus unterschiedlichem Material vorzusehen. Verfahren zur Herstellung von TPU sind beispielsweise in EP 692 510, WO 00/44821, EP 11 74 459 und EP 11 74 458 beschrieben. Insbesondere können für die Herstellung des Polsterkerns auch Mischungen mit Co- oder Terpolymeren eingesetzt werden. Hierdurch können unterschiedliche Dämpfungs- und Bewegungseigenschaften des Polsterkerns erzielt werden. Auch ist es insbesondere möglich, die entsprechenden Materialien in unterschiedlichen Bereichen stärker zu verdichten, so dass hierdurch die Dämpfungs- und Bewegungseigenschaften beeinflusst werden können. Der Polsterkern weist insbesondere in einem Sitzbereich des Sattels ein Elastizitätsmodul von 0,1 bis 10 MPa, insbesondere 0,1 bis 5 MPa und besonders bevorzugt 0,1 bis 1,0 MPa auf. Das besonders bevorzugte Material Infinergy E-TPU weist ein Elastizitätsmodul von 0,1 bis 0,5 MPa auf. Des Weiteren ist es besonders bevorzugt, dass der Polsterkern aufgrund seiner geringen Dichte ein geringes Gewicht aufweist. Insbesondere weist der Polsterkern eine Dichte von weniger als 1 g/cm³, besonders bevorzugt weniger als 0,5 g/cm³, und insbesondere weniger als 0,2 g/cm3 auf. Das Reboundverhalten des Polsterkerns liegt vorzugsweise im Bereich von mehr als 30%, insbesondere mehr als 40% und besonders bevorzugt mehr als 50%.

In bevorzugter Ausführung des erfindungsgemäßen Verfahrens und/oder des erfindungsgemäßen Fahrradsattels ist die Verbindung mehrerer, insbesondere aller, Schichten des Fahrradsattels trennmittelfrei und/oder klebstofffrei und/oder primerfrei. Vorzugsweise ist insbesondere die Verbindung zwischen Beschichtungsmittel und Sattelpolster, bspw. die Verbindung zwischen Beschichtungsmittel und Sitzpolster; und/oder die Verbindung zwischen Sattelpolster und Sattelschale trennmittelfrei und/oder klebstofffrei und/oder primerfrei. Insbesondere ist die Verbindung zwischen Sitzpolster und Polsterkern trennmittelfrei und/oder klebstofffrei und/oder primerfrei. Es ist somit bevorzugt, dass zwischen den Schichten des Fahrradsattels, insbesondere den vorstehenden Schichten kein Trennmittel, kein Klebstoff und/oder kein Primer angeordnet ist.

In bevorzugter Ausführung weist das Sattelgestell Metall, bspw. Stahl, vorzugsweise Edelstahl, und/oder Aluminium, auf, besteht insbesondere daraus. Das Sattelgestell ist insbesondere gestrahlt, vorzugsweise mittels Glasperlenstrahlens gestrahlt.

In bevorzugter Ausführung ist das Verfahren zur Herstellung des erfindungsgemäßen Sattels ausgeführt. Es ist bevorzugt, dass das erfindungsgemäße Verfahren eines oder mehrere Merkmale der im Rahmen des erfindungsgemäßen Fahrradsattels beschriebenen Merkmale aufweist. Insbesondere weist der erfindungsgemäße Fahrradsattel eines oder mehrere Merkmale der im Rahmen des erfindungsgemäßen Verfahrens beschriebenen Merkmale auf.

Durch die Erfindung kann vorteilhaft die Verarbeitung, insbesondere die Herstellung und/oder die Weiterverwertung, bspw. das Recycling, von Fahrradsätteln verbessert werden. Z. B. kann aufgrund der gemeinsamen Herstellung, insbesondere des gemeinsamen Urformens, die Produktion des Sattels verbessert, vorzugsweise effizienter umgesetzt werden. Aufgrund des zumindest größtenteils, insbesondere im Wesentlichen vollständig, aus PU bestehenden Sattelkörpers kann der Sattelkörper und insbesondere der Sattel einfach recycelt werden. Die Recyclebarkeit des Sattels wird dabei insbesondere noch durch das lösbare, vorzugsweise abnehmbare, Sattelgestell von der Sattelschale verbessert.

Nachfolgend wird die Erfindung anhand einer bevorzugten Ausführungsform unter Bezugnahme auf die anliegenden Zeichnungen näher erläutert.

### Es zeigen:

- Fig. 1: eine Seitenansicht einer Ausführungsform eines erfindungsgemäßen Fahrradsattels,
- Fig. 2: eine Schnittansicht (gemäß II-II aus Fig. 5) des Fahrradsattels aus Fig. 1,
- Fig. 3: eine Explosionsdarstellung des Fahrradsattels aus Fig. 1,
- Fig. 4: eine Untersicht des Fahrradsattels aus Fig. 1, und
- Fig. 5: eine Draufsicht des Fahrradsattels aus Fig. 1.

Ähnliche oder identische Elemente werden in den Figuren mit den gleichen Bezugszeichen identifiziert. Insbesondere zur verbesserten Übersichtlichkeit werden, vorzugsweise bereits identifizierte Elemente nicht in allen Figuren mit Bezugszeichen versehen.

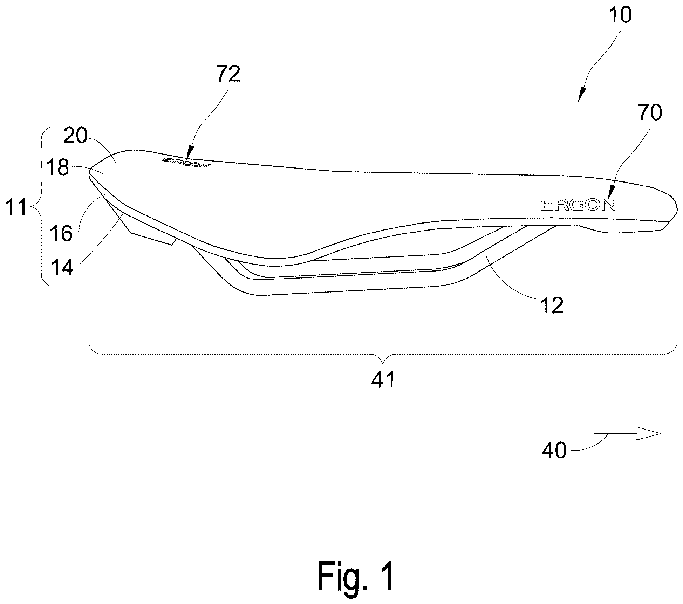

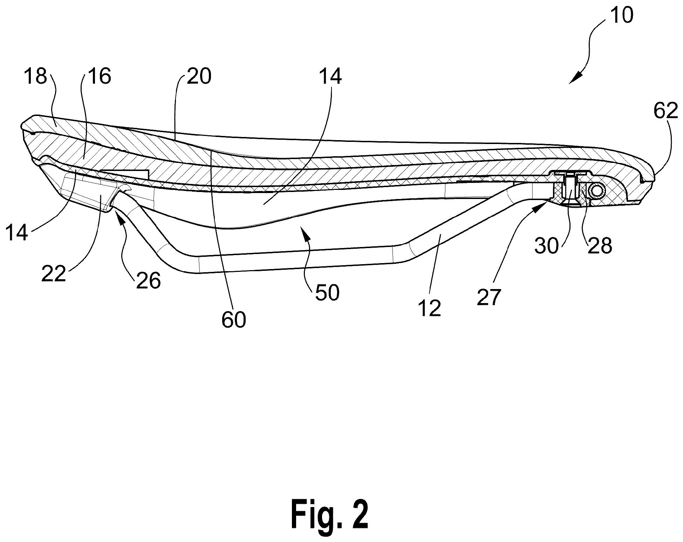

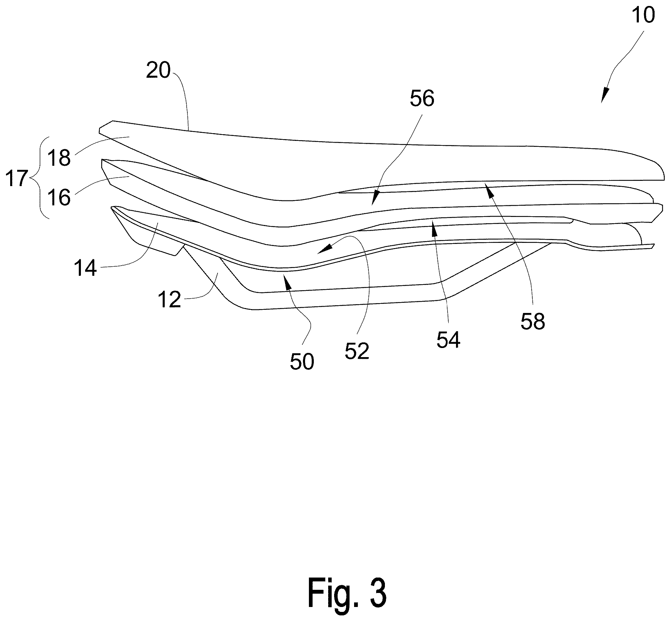

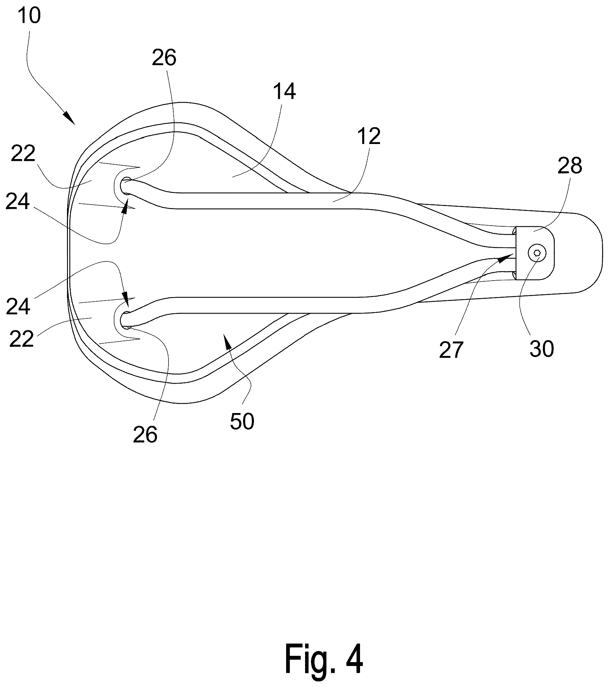

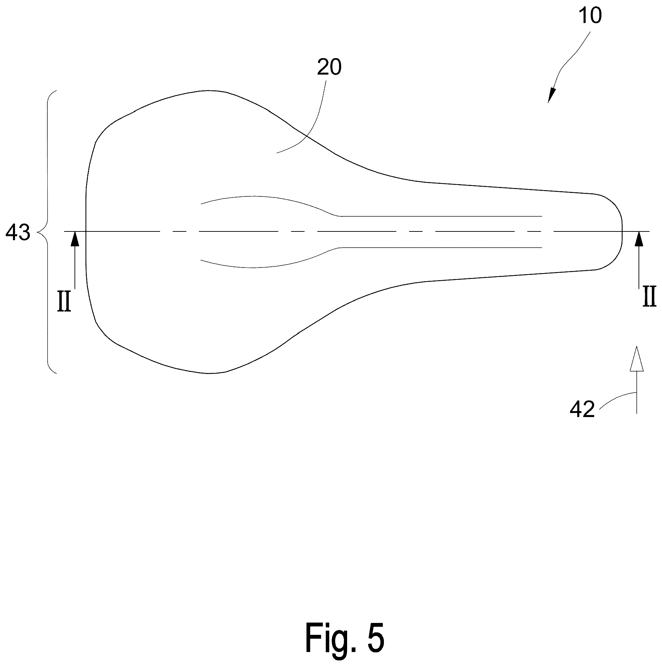

Figur 1 zeigt eine erfindungsgemäße Ausführungsform eines Fahrradsattels 10 in Seitenansicht. Figur 2 zeigt einen Längsschnitt, Figur 3 eine Explosionsdarstellung, Figur 4 eine Untersicht und Figur 5 eine Draufsicht des Fahrradsattels 10 aus Figur 1.

Der Fahrradsattel 10 weist einen Sattelkörper 11 und ein mit dem Sattelkörper 11 verbundenes Sattelgestell 12 auf.

Der Sattelkörper 11 weist eine Sattelschale 14, einen Polsterkern 16, ein Sitzpolster 18 und eine Deckschicht 20 auf. Der Polsterkern 16 und das Sitzpolster 18 bilden gemeinsam ein Sattelpolster 17 des Fahrradsattels 10 aus.

Eine Unterseite 50 der Sattelschale 14 ist mit dem Sattelgestell 12 verbunden. Hierzu weist die Unterseite 50 der Sattelschale 14 dargestellt zwei nach unten weisende Überstände 22 mit jeweils einer Aufnahmeöffnung 24 zur formschlüssigen, bevorzugt lösbaren, besonders bevorzugt einsteckbaren und herausziehbaren, Verbindung mit Enden 26 des Sattelgestells 12 auf (vgl. Fig. 4). Weitergehend ist ein schraubbares Klemmelement 28 vorgesehen, das mittels Schraube 30 in die Unterseite 50 der Sattelschale 14 eingeschraubt werden kann, sodass zwischen Klemmelement 28 und Unterseite 50 der Sattelschale 14 ein zentraler, vorderer Bereich des Sattelgestells 12 fixierbar ist, sodass hierdurch eine kraftschlüssige, lösbare Verbindung zwischen Sattelgestell 12 und Sattelschale 14 im vorderen Bereich des Fahrradsattels 10 umgesetzt ist.

Eine Oberseite 52 der Sattelschale 14 ist mit einer Unterseite 54 des Polsterkerns 16 vollflächig, insbesondere stoffschlüssig und/oder klebstofffrei, verbunden. Eine Oberseite 56 des Polsterkerns 16 ist mit einer Unterseite 58 des Sitzpolsters 18 vollflächig, insbesondere stoffschlüssig und/oder klebstofffrei, verbunden. Eine Oberseite 60 sowie eine umlaufende Seitenfläche 62 des Sitzpolsters 18 ist mit der Deckschicht 20 vollflächig, insbesondere stoffschlüssig und/oder klebstofffrei, beschichtet. Mit anderen Worten erstreckt sich die Deckschicht somit über die in Querrichtung (dargestellt durch Pfeil 42, Fig. 5) liegenden Seiten, die Vorderseite und die Rückseite des Sitzpolsters 18.

Dargestellt weist der Fahrradsattel 10 eine einzige einstückige Sattelschale 14, einen einzigen einstückigen Polsterkern 16, ein einziges einstückiges Sitzpolster 18 und eine einzige einstückige Deckschicht 20 auf, wobei sich Sattelschale 14, Polsterkern 16, Sitzpolster 18 und Deckschicht 20 über einen Großteil der Sattellänge 41 (vgl. Fig. 1) und einen Großteil der Sattelbreite 43 (vgl. Fig. 5), insbesondere im Wesentlichen über die gesamte Sattellänge 41 und die gesamte Sattelbreite 43, erstrecken. Andererseits ist alternativ insbesondere eine Ausführung möglich, in der einzelne dieser Elemente mehrteilige vorgesehen sind, bspw. ein mehrteiliger Polsterkern 16 und/oder eine mehrteilige Deckschicht 20, und/oder in der einzelne dieser Elemente sich nur teilweise über die Sattellänge 41 und/oder die Sattelbreite 43 erstrecken, bspw. ein bereichsweiser Polsterkern 16 und/oder eine teilweise Beschichtung des Sattelpolsters 17, insbesondere des Sitzpolsters 18, mit der Deckschicht 20.

Die Sattellänge 41 liegt insbesondere in einer Längsrichtung (dargestellt durch Pfeil 40, vgl. Fig. 1), wobei es sich um eine Fahrtrichtung eine mit dem Fahrradsattel 10 verbundenen Fahrrads (nicht dargestellt) handelt. Die Sattelbreite 43 liegt in der Querrichtung 42, wobei die Querrichtung 42 senkrecht zur Längsrichtung 40 und insbesondere parallel zu einer Unterfläche auf dem das Fahrrad angeordnet ist, verläuft.

Der Fahrradsattel 10 ist insbesondere mittels eines Herstellungsverfahrens mit einem oder mehreren Merkmalen des erfindungsgemäßen Verfahrens hergestellt.

Vorzugsweise ist die Deckschicht 20 ausgebildet durch ein Beschichtungsmittel das in eine Negativform einer Gussform (nicht dargestellt) aufgebracht ist, wobei anschließend ein PU-Schaum zur Ausbildung des Sitzpolsters 18 in die Negativform eingebracht wird. Hierdurch erfolgt vorzugsweise eine urgeformt und stoffschlüssige, insbesondere klebstofffreie, Ausbildung der Deckschicht 20 verbunden mit dem Sitzpolsters 18.

Es ist bevorzugt, dass die Verbindung zwischen Deckschicht 20 und Sitzpolster 18, und/oder zwischen Sitzpolster 18 und Polsterkern 16, und/oder zwischen Polsterkern 16 und Sattelschale 14 während des, vorzugsweise gemeinsamen, Urformens der entsprechenden Elemente erfolgt.

Es ist bevorzugt, dass die Deckschicht 20 aus dem Material das von der Firma BASF unter dem Produktnamen "NovaCoat-D" und/oder das unter dem Produktnamen "NovaCoat-P" vertrieben wird hergestellt ist, wobei das Beschichtungsmittel somit insbesondere "NovaCoat-D" und/oder "NovaCoat-P" aufweist oder daraus besteht. Bevorzugt wird das Sitzpolster 18 aus dem von der Firma BASF unter dem Produktnamen "Elastopan" vertriebenen Material hergestellt. Der Polsterkern 16 wird insbesondere aus dem von der Firma BASF unter dem Produktnamen "Infinergy" vertriebenen Material oder aus dem von der Firma Huntsman unter dem Produktnamen "Smartlite O" vertriebenen Material hergestellt. Insbesondere wird die Sattelschale 14 aus dem Material das von der Firma BASF unter dem Produktnamen "Elastollan" oder von der Firma Huntsman unter dem Produktnamen "Smartlite O" vertrieben wird hergestellt. Das Sattelgestell 12 ist insbesondere aus Metall, vorzugsweise Aluminium und/oder Stahl, hergestellt.

Die Deckschicht 20 weist in der Deckschicht 20 urgeformte Texturen 70, 72 auf, bspw. durch eine gelaserte Texturierung in der Negativform.

Aufgrund des gleichen Materials Polyurethan der Sattelschale 14, des Polsterkerns 16, des Sitzpolsters 18 und der Deckschicht 20 kann der Sattelkörper 11 auf einfache Weise recycelt, bspw. einstückig geschreddert und sodann weiterverwertet, werden.

## Patentansprüche

1. Verfahren zur Herstellung eines Fahrradsattels (10), mit den Schritten:
- Bereitstellen einer Gussform,
- Aufbringen, insbesondere Besprühen, eines Polyurethan aufweisenden Beschichtungsmittels auf eine Negativform der Gussform zur Ausbildung einer Deckschicht (20) des Fahrradsattels (10), und
- Einbringen eines PU-Schaums in die mit dem Beschichtungsmittel bedeckte Negativform zur Ausbildung eines Sitzpolsters (18) eines Sattelpolsters (17) des Fahrradsattels (10).

2. Verfahren nach Anspruch 1, **dadurch gekennzeichnet, dass** das Aufbringen des Beschichtungsmittels unmittelbar auf die, insbesondere trennmittelfreie, Negativform erfolgt.

3. Verfahren nach Anspruch 1 oder 2, **dadurch gekennzeichnet, dass** beim Einbringen des PU-Schaums eine formschlüssige, insbesondere klebstofffreie, Verbindung zwischen PU-Schaum und Beschichtungsmittel erfolgt.

4. Verfahren nach einem der Ansprüche 1-3, **dadurch gekennzeichnet, dass** die Gussform eine, insbesondere gelaserte, Texturierung aufweist.

5. Verfahren nach einem der Ansprüche 1-4, **gekennzeichnet durch** den Schritt: Verbinden, bevorzugt Anspritzen, besonders bevorzugt Hinterspritzen, eines Polsterkerns (16) des Sattelpolsters (17) mit dem Sitzpolster (18).

6. Verfahren nach einem der Ansprüche 1-5, **gekennzeichnet durch** den Schritt: Verbinden, bevorzugt Anspritzen, besonders bevorzugt Hinterspritzen, einer Sattelschale (14) mit dem Sattelpolster (17), insbesondere dem Polsterkern (16) und/oder dem Sitzpolster (18).

7. Verfahren nach Anspruch 6, **dadurch gekennzeichnet, dass** zum Verbinden der Sattelschale (14) mit dem Sattelpolster (17) die Sattelschale (14) in der Gussform angeordnet wird und beim Einbringen des PU-Schaums zur Ausbildung des Sitzpolsters (18) und/oder beim Einbringen eines PU-Schaums zur Ausbildung des Polsterkerns (16) von dem PU-Schaum um- und/oder hinterspritzt wird.

8. Verfahren nach Anspruch 6 oder 7, **gekennzeichnet durch** den Schritt: Verbinden, insbesondere form- und/oder kraftschlüssiges Verbinden, eines Sattelgestells (12) mit der Sattelschale (14).

9. Verfahren nach einem der Ansprüche 1-8, **dadurch gekennzeichnet, dass** die Gussform eine Negativform des Sattelpolsters (17), insbesondere des Sitzpolsters (18), vorzugsweise des Sitzpolsters (18) mit Decksicht und/oder mit Polsterkern (16) aufweist.

10. Verfahren nach einem der Ansprüche 1-9, **gekennzeichnet durch** den Schritt: Entformen des mit der Deckschicht (20) verbundenen Polsters aus der Gussform.

11. Fahrradsattel, insbesondere hergestellt mit einem Verfahren nach einem
der Ansprüche 1-10, mit
einer Sattelschale (14),
einem mit einer Unterseite (50) der Sattelschale (14) verbundenen Sattelgestell, und
einem mit einer Oberseite (52) der Sattelschale (14) verbundenen Sattelpolster,
wobei das Sattelpolster ein Sitzpolster (18) mit einer mit einer Oberseite (56) des Sitzpolsters (18) verbundenen Deckschicht (20) aufweist, und wobei die Deckschicht (20) als Beschichtung, insbesondere Beschichtungslack, mit dem Sitzpolster (18) verbunden ist.

12. Fahrradsattel nach Anspruch 11, **dadurch gekennzeichnet, dass** die Deckschicht (20) stoffschlüssig, insbesondere klebstofffrei, mit dem Sitzpolster (18) verbunden ist; und/oder
**dadurch gekennzeichnet, dass** das Sattelpolster einen mit der Oberseite (52) der Sattelschale (14) und mit einer Unterseite (54) des Sitzpolsters (18) verbundenen Polsterkern (16) aufweist; und/oder
**dadurch gekennzeichnet, dass** ein, zumindest die Deckschicht (20), das Sitzpolster (18) und die Sattelschale (14) sowie vorzugsweise den Polsterkern (16) aufweisender Sattelkörper (17) des Fahrradsattels (10), insbesondere der gesamte Sattelkörper (17), PU aufweist, vorzugsweise zu zumindest 90 oder zumindest 95 oder zumindest 99 Volumen- und/oder Gewichtsprozent daraus besteht.

13. Fahrradsattel nach Anspruch 11 oder 12, **dadurch gekennzeichnet, dass** sich die Deckschicht (20), das Sitzpolster (18) und die Sattelschale (14) sowie vorzugsweise der Polsterkern (16) über den Großteil der Sattellänge des Fahrradsattels (10), insbesondere über die gesamte Sattellänge (41), erstrecken.

14. Fahrradsattel nach einem der Ansprüche 11-13 und/oder Verfahren nach einem der Ansprüche 1-9, **dadurch gekennzeichnet, dass** es sich bei dem PU-Schaum um einen niedervernetzten oder nicht-vernetzten PU-Schaum handelt.

15. Fahrradsattel nach einem der Ansprüche 11-13 und/oder Verfahren nach einem der Ansprüche 1-9, **dadurch gekennzeichnet, dass** der Polsterkern (16) TPU und/oder der E-TPU aufweist, insbesondere daraus besteht.
